# EUROPEAN PATENT SPECIFICATION

(11) **EP 3 856 381 B1**
(45) Date of publication and mention of the grant of the patent: **14.10.2026**
(21) Application number: 19888566.7
(22) Date of filing: 26.09.2019
(51) Int. Cl.: A63H 11/20, B62D 57/02, B62D 57/032

(54) **LEGGED ROBOT**
MIT BEINEN AUSGESTATTETER ROBOTER
ROBOT DOTÉ DE JAMBES

(30) Priority: 26.09.2018 US 201862736739 P; 26.09.2018 US 201862736743 P
(43) Date of publication of application: 04.08.2021
(73) Proprietor: Ghost Robotics Corporation, County of New Castle, DE 19808 (US)
(72) Inventor: KENNEALLY, Gavin, Philadelphia, PA 19103 (US); PARIKH, Jiren, Philadelphia, PA 19125 (US)
(74) Representative: Page White Farrer
(86) International application number: PCT/US2019/053256
(87) International publication number: WO 2020/112229

(56) References cited:
- WO-A1-2018/161936
- CN-A- 104 890 759
- CN-A- 105 501 324
- CN-U- 207 345 974
- US-A1- 2002 089 297
- US-A1- 2002 116 091
- US-A1- 2002 179 342
- US-A1- 2020 282 554

## Description

### CROSS-REFERENCE TO RELATED APPLICATIONS

This application claims the benefit of earlier filed U.S. Provisional Application No. 62/736,739, filed on September 26, 2018, as well as U.S. Provisional Application No. 62/736,743, filed September 26, 2018

### BACKGROUND

Due to their electromechanical complexity, legged robots can be difficult to maintain and repair without a highly trained technician present. This may limit functionality and use of such robots, particularly when technicians are not immediately available or in high-stress environments such as military or policing situations where a complex design will increase the time to repair or make onsite repair difficult or impossible. The issue may be further complicated when a robot is desired for operation in harsh environments where componentry may rapidly deteriorate or the robotic device has a high probability of damage during operation. It may be advantageous for a robotic system to have a modular design, such that core components may be interchanged by users with less repair experience or knowledge of the system design. Because robotic systems may be desired for use in environments hostile to human presence, it may also be advantageous for component interchange to be possible without requiring humans to be in physical proximity to the robotic system.

Users of robots, and specifically legged robots, may want to interchange variants of key components for different use cases and environments without purchasing a new robot. For example, an exoskeleton frame may be sized larger to accommodate a larger sensor, battery or robotic actuator and leg, or robotic actuator. Similarly, a leg may be sized in length for a specific application such as subterranean tunnel exploration or for climbing stairs, while different sizes and types of motors may be used for specific tasks and power requirements, such as to move over certain substrates such as sand or mud, swim in water or carry heavier payloads. Such interchangeability increases the usability of the robots for a broader range of use cases and reduce the cost for a user.

Furthermore, it may be desirable to have sealed sub-assemblies individually injected with inert gas to create positive pressure to block external flammable gases, dust and particulate from entering into the sub-assemblies and causing potential fire or explosive discharge, and allowing them to be used in environments such as coal mines, gas manufacturing plants and refineries where equipment must be intrinsically safe for operation.

Finally, it may be desirable to have a sub-assembly design where all electronics are separated and sealed with the mechanicals can be operated without an external cover (skin), reducing weight and supporting faster interchange of specific subassemblies.

CN104890759A discloses a four-footed robot, which comprises a rack, a dust shield and four mechanical legs with identical structures. The rack is internally provided with twelve servo motors, which comprise for each leg: a lifting motor; a propelling motor; and a swinging motor. CN207345974U discloses a four -leg robot including a fuselage and mechanical legs. WO2018161936A1 discloses a leg structure of a quadruped robot includes a body and four separate leg modules. Each leg module includes a thigh motor assembly, a calf motor assembly, a hip joint motor assembly and an associated linkage and fixing base of the hip joint motor assembly.

### SUMMARY OF DISCLOSURE

Some or all of the above needs and/or problems may be addressed by certain embodiments of the disclosure. The present invention suggests a legged robot, comprising: a frame comprising a plurality of links in mechanical communication with a plurality of brackets, the frame forming a front, back, top, bottom, and sides; four interchangeable leg subassemblies, the leg subassemblies being in mechanical communication with one or more of the plurality of brackets, each leg subassembly comprising an electric knee motor, an electric abduction motor, an electric hip motor, and a pod enclosing motor control electronics and at least one of the electric abduction motor and the electric hip motor in a secure and isolated environment, wherein: the electric hip motor is mechanically coupled to an output of the electric abduction motor, the electric knee motor is mechanically coupled to an output of the electric hip motor, the electric abduction motor is mechanically coupled to the frame, and the pod comprises an interface bracket configured to align and connect the leg subassembly to the frame and supply electric power and control signals to the components of the pod via an alignment guide and alignment fastener; a computer module in mechanical communication with one or more of the plurality of brackets and in electrical communication with the leg subassemblies through the interface brackets; and a power module in mechanical communication with one or more of the plurality of brackets and in electrical communication with the leg subassemblies through the interface brackets and the computer module.

### BRIEF DESCRIPTION OF THE DRAWINGS

The detailed description is set forth with reference to the accompanying drawings, which are not necessarily drawn to scale. The use of the same reference numbers in different figures indicate similar or identical terms.
Fig. 1 is an exploded perspective view of the legged robot according to an aspect of the present disclosure.
Fig. 2 is a perspective view of the Frame according to an aspect of the present disclosure.
Fig. 3 is a perspective view of Leg Subassembly according to an aspect of the present disclosure.
Fig. 4 is a perspective view of Energy Box according to an aspect of the present disclosure.
Fig. 5 is a perspective view of Computing Box according to an aspect of the present disclosure.
Fig. 6 is a side view of a portion of the Frame according to an aspect of the present disclosure.
Fig. 7 is a side view of the Pod of the Leg Subassembly according to an aspect of the present disclosure.
Fig. 8 is a top view of a portion of the Frame according to an aspect of the present disclosure.
Fig. 9 is a top view of the Pod within the Leg Subassembly according to an aspect of the present disclosure.
Fig. 10 is a front view of the Sensor Panel according to an aspect of the present disclosure.

### DETAILED DESCRIPTION

In order that the present invention may be fully understood and readily put into practical effect, there shall now be described by way of non-limiting examples of preferred embodiments of the present invention, the description being with reference to the accompanying illustrative figures.

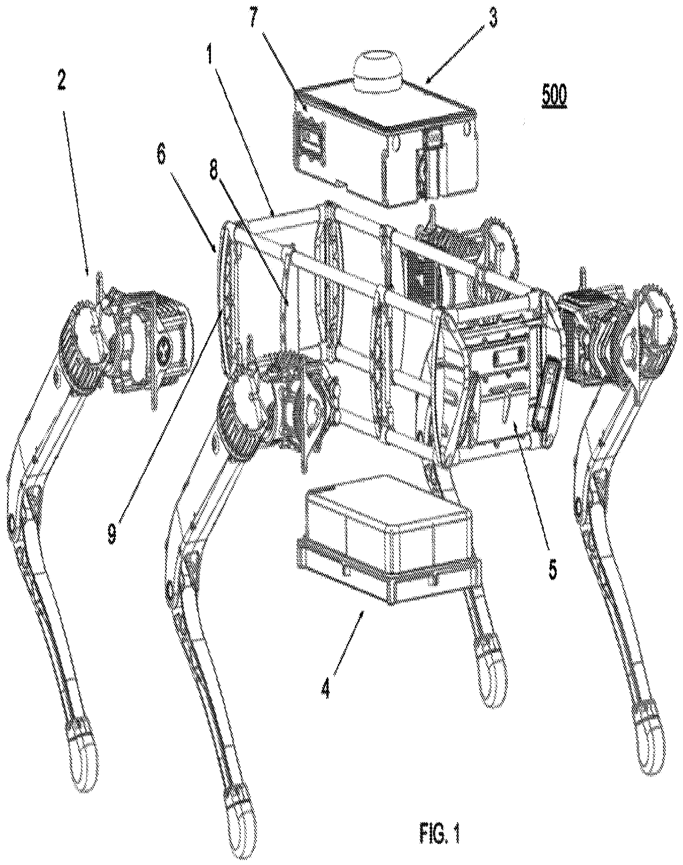

Figure 1 shows an exploded perspective view of **Robotic System 500** according to an aspect of the present disclosure. **Robotic System 500** may have **Frame 1** capable of securing and interfacing with **Leg Subassembly 2, Computing Box 3, Energy Box 4,** and other components. **Frame 1** may be formed of material suitable for an intended environment, including but not limited to, metals, ceramics, plastics, composites, and wood. In general, the materials typically suitable for many applications may be aluminum, steel, or composites.

**Robotic System 500** may have **Sensor Panel 5, Sensor Strip 6,** and **Sensor Enclosure 7** that may support various components and connectors, including, but not limited to, sensors, screens, buttons, interface ports and buses, switches, electrical components capable of transmitting or receiving power to or from an outside source including in the presence of an electromagnetic field.

Non-limiting examples of sensor components may include light sensors such as cameras, photoresistors, phototubes, phototransistors, or photovoltaic cells; sound sensors such as microphones; temperature sensors such as a LM34, LM35, TMP35, or TMP 36 sensors; contact sensors such as push button switches, tactile bumper switches, or capacitive contact sensors such as touch screens; proximity sensors such as infrared (IR) transceivers, ultrasonic sensors, or photoresistors; distance sensors such as laser range sensors including LIDAR, and stereo cameras; pressure sensors such as a barometer; tilt sensors such as an analog mercury-suspension glass bulb sensor; positioning sensors such as global position system (GPS) sensors and digital magnetic compasses; acceleration sensors such as accelerometers; gyroscopes; inertial measurement units; electrical sensors such as voltmeters; radiofrequency sensors; radar; chemical sensors; or any other device capable of receiving or transmitting information or transforming environmental information into an analytically useful signal.

**Sensor Panel 5** may be a panel that holds electrical, sensory and user interface components that may be attached to the front, back, or side of **Frame 1. Sensor Strip 6** may be an enclosure or attachment point of electrical and sensory components that may attach to **Side Brackets 8** or **Corner Brackets 9** through various connective techniques including but not limited to, welding, clamping, adhesive, threaded fasteners, interference fit, magnetic, hook and loop, or similar j oining technologies. **Sensor Enclosure 7** may be an enclosure of electrical and sensory components that may attach to **Computing Box 3, Energy Box 4, Frame 1,** or panels attached to **Frame 1.** Attachment of **Sensor Enclosure 7** may be done through various connective techniques including but not limited to, adhesive, threaded fasteners, interference fit, magnetic, hook and loop, or similar connection mechanisms, or it may be embedded directly into another component in or on **Robotic System 500.** In one non-limiting aspect as shown in Figure 1, **Sensor Enclosure 7** may be affixed to **Computing Box 3,** but it is understood that **Sensor Enclosure 7** may be moved to other components within **Robotic System 500.**

Still referencing Figure 1, **Frame 1** may contain **Side Brackets 8** and **Corner Brackets 9** that may provide structural support to **Frame 1** and the components secured thereon. **Side Brackets 8** and **Corner Brackets 9** may be made out of similar material to **Frame 1** depending on the intended use of **Robotic System 500.** In general, **Side Brackets 8** and **Corner Brackets 9** may be designed with the specific function of **Robotic System 500** in mind. For example, if **Robotic System 500** is intended to carry a large payload, then **Side Brackets 8** and **Corner Brackets 9** may be made out of a sturdier material than other components of **Frame 1** to better support the payload against the forces of gravity. In general, common material suitable for many applications includes steel, aluminum and composites.

Still referencing Figure 1, **Frame 1** may be coupled to one or more **Leg Subassemblies 2.** Each **Leg Subassembly 2** may enable robotic movement such that **Robotic System 500** is capable of moving translationally, or rotationally, within an environment in a controlled manner.

Still referencing Figure 1, **Robotic System 500** may include a **Computing Box 3** which may house electrical and computing components assisting the operation and control of **Robotic System 500. Robotic System 500** may also include an **Energy Box 4** which may house components capable of storing and supplying electrical power to **Robotic System 500.** Although Figure 1 shows **Computing Box 3** and **Energy Box 4** located substantially at the center of **Frame 1,** other configurations are possible depending on intended use of **Robotic System 500.** For example, **Energy Box 4** may be switched to the top, and **Computing Box 3** switched to the bottom; both **Energy Box 4** and **Computing Box 3** may be shifted forward or aft; or they may be rotated in various configurations within, on or about **Frame 1.**

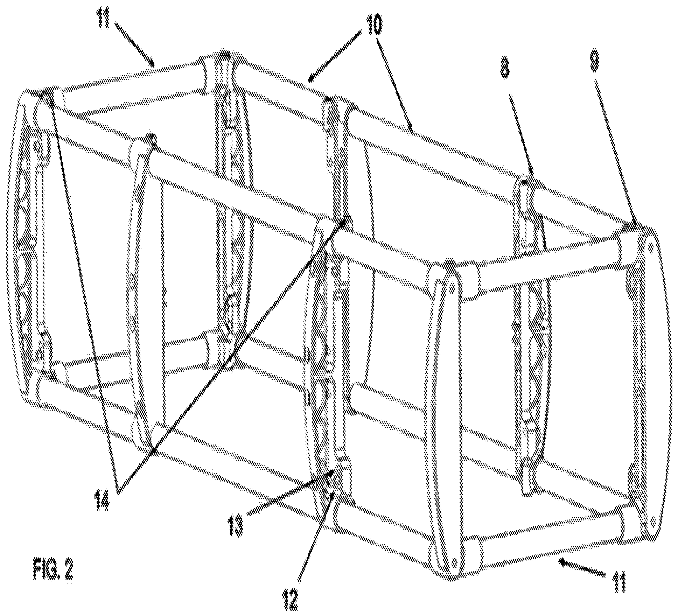

Figure 2 is a view of **Frame 1** according to an aspect of the present disclosure. **Frame 1** may be formed of links and brackets, such as **Side Links 10** that may be fastened by or to **Side Brackets 8,** and **End Links 11** that may be fastened by or to **Side Links 10** via **Corner Brackets 9.** In one non-limiting aspect, additional **End Links 11** (not shown) may be fastened perpendicularly to **Side Links 10** via **Side Brackets 8,** and this may add stability to **Frame 1** at increased weight and cost. Fastening may be done by welding, adhesive, clamping, interference fits, or other joining technologies or mechanisms. **Side and End Links 10 & 11** may be formed of any material suitable for the operating environment, including but not limited to, metals, ceramics, plastics, composites, and wood. In general, common material suitable for many applications includes steel, aluminum and composites. In one non-limiting aspect, **Side and End Links 10 & 11** may be formed as hollow tubes.

**Side and End Links 10 & 11** may be able to route electrical power and electronic signals from one component of **Robotic System 500** to other components. This may be done in various ways, including but not limited to, integrated circuitry within **Side and End Links 10 & 11,** or wire or fiber optics housed within **Side and End Links 10 & 11.** In some non-limiting examples, power and other signals may be routed via external cables; cables embedded within **Side Links 10** and/or **End Links 11;** and/or embedded connectors that engage when a sensor or sensor head is coupled to **Frame 1.**

**Side Brackets 8** may provide structural support to **Frame 1** and may provide connection points to interior and exterior components, such as **Energy Box 4** and **Computing Box 3.** In some non-limiting examples, **Side Brackets 8** may couple to **Energy Box 4** and **Computing Box 3** with threaded fasteners, clips, adhesives, hook and loops, electromagnetic, interference fit, or other similar connection mechanisms. In some non-limiting examples, **Side Brackets 8** may couple to **Sensor Panel 5, Sensor Strip 6,** and **Sensor Enclosure** 7 (as shown in Fig. 1) with threaded fasteners, clips, adhesives, hook and loops, electromagnetic, interference fit, or other similar connection mechanisms.

**Corner Brackets 9** may provide structural support to **Frame 1** and may provide connection points to interior and exterior components, such as **Sensor Panel 5, Sensor Strip 6,** and **Sensor Enclosure 7** (as shown in Fig. 1). In some non-limiting examples, **Corner Brackets 9** may couple to **Sensor Panel 5, Sensor Strip 6,** and **Sensor Enclosure 7** with threaded fasteners, clips, adhesives, hook and loops, electromagnetic, interference fit, or other similar connection mechanisms.

Although not pictured in Figure 1 or 2, it is understood that interior or exterior components including **Computing Box 3, Energy Box 4, Sensor Panel 5, Sensor Strip 6,** and **Sensor Enclosure 7** may be affixed either to **Side Brackets 8, Corner Brackets 9** or **Frame 1** as called for by the design considering the intended purpose of **Robotic System 500.**

**Side Brackets 8** may also provide a connection to **Leg Subassembly 2** through **Alignment Guide 12** and **Alignment Fastener 13. Alignment Guide 12** may be a geometric feature including, but not limited to, a hole, prong, or peg capable of providing alignment and a load bearing connection when attaching to **Leg Subassembly 2** through the use of pins, splines, edge contacts, or similar mechanisms. **Alignment Fastener 13** may be a retention mechanism including, but not limited to, a hole, prong, or peg to align **Leg Subassembly 2** with **Frame 1** through the use of connectors including, but not limited to, threaded fasteners, clips, adhesives, hook and loops, interference fits, electromagnetic, or other fasteners. Figure 2 shows one non-limiting aspect wherein **Alignment Guide 12** may be a prong or peg, and **Alignment Fastener 13** may be a hole. Although not pictured in Figure 2, in one non-limiting aspect, **Alignment Guide 12** and **Alignment Fastener 13** may be included on **Corner Brackets 9** thereby enabling connection to **Leg Subassembly 2** via **Corner Brackets 9.** Such a configuration may be advantageous in certain operational circumstances.

Still referencing Figure 2, **Frame 1** may also include **Payload Fastener 14,** which may be a retention mechanism to hold external devices or payloads onto **Frame 1** through the use of threaded fasteners, clips, adhesives, hook and loops, electromagnetic, interference fit, or other similar connectors. Although Figure 2 shows **Payload Fastener 14** as part of **Side Brackets 8** and **Corner Brackets 9, Payload Fastener 14** may be located anywhere on **Frame 1** and in any configuration desired by the user, such that the payload is fastened and secured according to the unique needs of the user.

Referencing now Figures 1 and 2, **Energy Box 4** may connect to **Side Brackets 8** in a way that such connection is easily and intentionally engaged or disengaged. In Figure 1, **Energy Box 4** may slide into ports located on **Side Brackets 8** through the underside of **Frame 1.** Similarly, **Computing Box 4** may have a similar connection that is easily intentionally engaged or disengaged allowing **Computing Box 4** to slide in through the top of **Frame 1.**

Referencing again Figure 2, panels may be mounted between each **Side Brackets 8** and **Corner Brackets 9** such that the interior of **Frame 1** is an isolated or quasi-isolated environment. These panels may be made out of any material deemed suitable for use by the user depending on the intended purpose. For example, panels may be serve a decorative, support or protective purpose. Figure 1 shows an example panel according to one non-limiting aspect wherein Sensor **Panel 5** is mounted to the front of **Frame 1,** via **Corner Brackets 9.** Panels may also be secured to **Side and End Links 10 & 11** for additional support through connection methods such as snap fits, interference fits, electromagnetic, hook and loops, or similar methods.

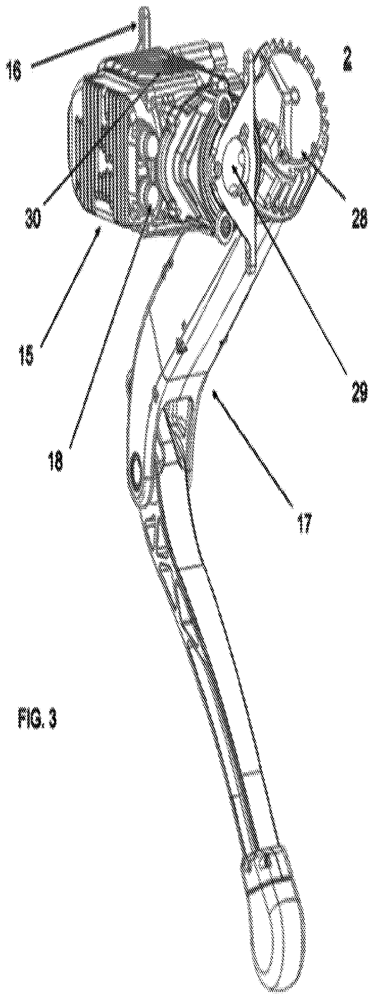

Figure 3 is a view of the **Leg Subassembly 2** according to an aspect of the present disclosure. **Leg Subassembly 2** may contain **Pod 15** which may contain motor control electronics as well as a subset of motors, mechanical reductions, transmissions, and encoders in a secure and isolated environment. **Leg Subassembly 2** may also include **Interface Bracket 16** which may enable coupling to **Frame 1** through one or more of **Alignment Guide 12** and **Alignment Fastener 13. Pod 15** may have an electrical connection to **Interface Bracket 16** such that electrical power and/or electronic signals may be received and directed to the components within **Pod 15** thus supplying power and control to the components of **Pod 15. Pod 15** may also contain **Pod Connectors 18** that may provide an additional or alternative interface for providing power and electronic signals to the internal components of **Pod 15.**

**Leg Subassembly 2** may also have **Leg Components 17** including an upper leg hingably coupled to a lower leg that may be made out of materials such as metals, composites, plastics, ceramics, or others if deemed appropriate for the intended use, and may include additional internal electromotive components such as motors, reductions, transmissions, and encoders. Depending on electrical input received by the components of **Pod 15, Leg Subassembly 2** may be capable of performing translative or rotational movement with respect to **Frame 1** such that **Robotic System 500** may be capable of independent movement through its environment. The upper leg may be uncoupled from the lower leg thereby enabling interchange of the lower leg component. This may be done to repair a damaged lower leg, or may be done to replace the lower leg with a configuration more suitable to the intended environment, for example, with a component having different geometry. Similarly, a distal end of **Leg Components 17** may include a removable tread suitable for contact with the environment surface, or the ground. The shape of the removable tread may be optimized for the environment and may include a robotic foot, fins, wheels, claws, or others.

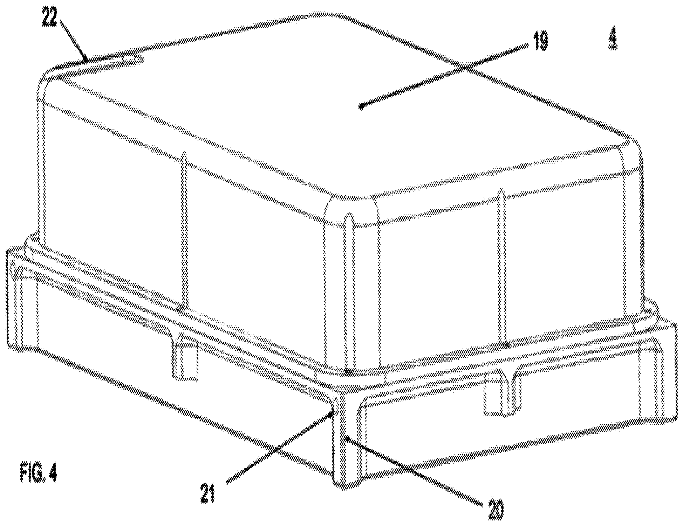

Figure 4 is a view of **Energy Box 4** according to an aspect of the present disclosure. **Energy Box 4** may have a **Protective Housing 19** wherein electrical and computing components are stored including, but not limited to, chemical batteries, capacitors, fuel cells, internal engines, as well as all necessary computing and control systems. **Protective Housing 19** may be constructed out of materials specifically designed for the environment in which **Robotic System 500** is to be used. For example, if such an environment was near or under water, then **Protective Housing 19** may be made constructed to be watertight out of a material that strongly resists corrosion and has proper buoyancy characteristics.

**Energy Box 4** may include **Energy Box Guide 20** which may guide a user to install **Energy Box 4** within **Frame 1.** In one non-limiting aspect, **Energy Box Guide 20** may be a unique geometric shape or frame that permits installation when **Energy Box 4** is oriented in a specific and correct way, relative to **Frame 1. Energy Box 4** may include a disengageable **Energy Box Fastener 21** that may provide additional structural support to **Energy Box 4. Energy Box Fastener 21** may be a clamp, adhesive, threaded fasteners, interference fit, magnetic, hook and loop, push pin or "push and click" connectors, or similar disengageable support technologies. In one non-limiting aspect, **Energy Box Fastener 21** may be a hole that mates with **Bracket Fastener 26** located on **Side Bracket 8.**

**Energy Box 4** may also have **Electrical Connector 22** that permits the transmission of electrical power and electronic signals to and from the components within **Energy Box 4. Electrical Connector 22** may include any method or mechanism for transmitting electronic signals and electrical power to or from the outside of **Energy Box 4** to or from the components therein, including but not limited to, wire connections, integrated circuits, wireless power transmission, or kinetically induced power generation. In one non-limiting example, **Energy Connector 22** may be an electrically conductive material inlaid within **Protective Housing 19,** capable of transmitting electronic signals and electrical power from the outside of **Energy Box 4** to the components therein upon contact. In one non-limiting example, **Energy Connector 22** may be made out of highly electrically conductive metal, such as silver or copper, or other electrically useful materials.

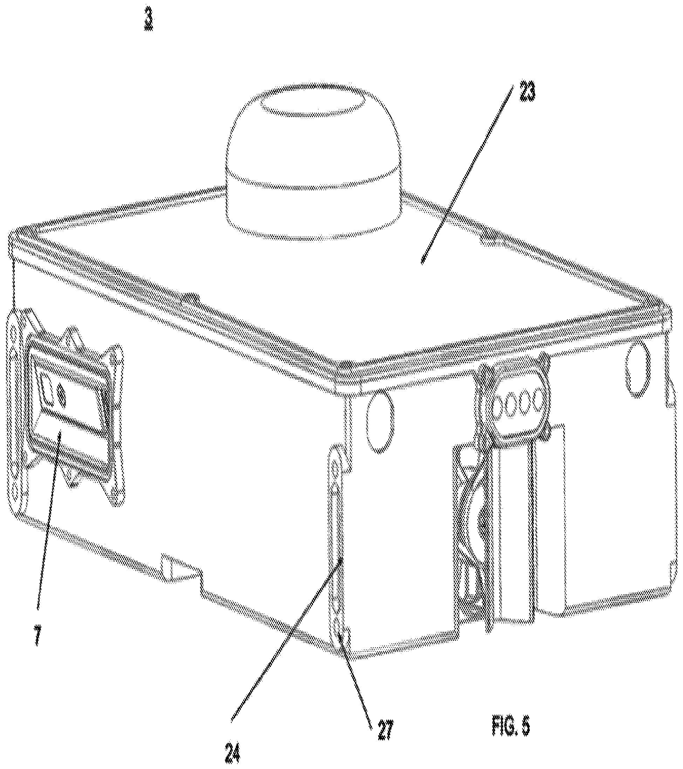

Figure 5 is a perspective view of **Computing Box 3. Computing Box 3** may contain a **Protective Housing 23** wherein electrical, computing, and control components are stored. **Protective Housing 23** may be constructed out of materials specifically designed for the environment in which **Robotic System 500** is to be used. For example, if such an environment was near or under water, then **Protective Housing 23** may be made constructed to be watertight out of a material that strongly resists corrosion, and that has proper buoyancy characteristics. In one non-limiting aspect, **Sensor Enclosure 7** may be affixed to or integrated with **Protective Housing 23** as shown in Figure 5.

**Computing Box 3** may include a **Computing Box Guide 24** which may easily guide a user to install **Computing Box 3** within **Frame 1.** In one non-limiting aspect, **Computing Box Guide 24** may be a unique geometric shape or frame that permits installation only when **Computing Box 3** is oriented in a specific and correct way, relative to **Frame 1. Computing Box 3** may include a disengageable **Computing Box Fastener 27** that may provide additional structural support to **Computing Box 3. Computing Box Fastener 27** may be a clamp, adhesive, threaded fasteners, interference fit, magnetic, hook and loop, push pin or "push and click" connectors, or similar disengageable support technologies. In one non-limiting aspect, **Computing Box Fastener 27** may be a hole that mates with **Bracket Fastener 26** located on **Side Bracket 8.**

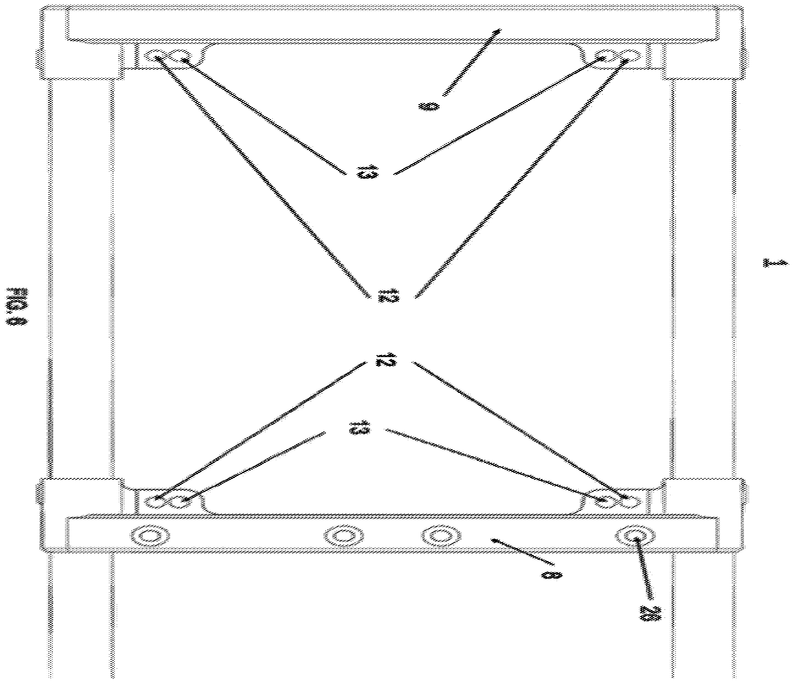

Figure 6 is a side view of an inside end of **Frame 1** according to one aspect of the present disclosure, showing **Side Brackets 8** and **Corner Brackets 9** inclusive of **Alignment Guide 12** and **Alignment Fastener 13. Side Brackets 8** and **Corner Brackets 9** may also include **Alignment Guide 12** and **Alignment Fastener 13** towards the top of **Frame 1.** This may enable **Frame 1** to couple with other motive subassemblies, other than **Leg Subassembly 2,** which may provide controlled motion in other ways. **Interface Bracket 16** may exist on different types of motive subassemblies thereby enabling controlled connection and interfacing with **Frame 1** via **Alignment Guide 12** and **Alignment Fastener 13.** Other subassemblies may utilize wheels, treads, spinning rotors, gyroscopes, fans, turbines, thrust components, or other mechanisms to achieve controlled movement. These assemblies may attach to **Frame 1** via **Alignment Guide 12** and **Alignment Fastener 13** located at either the top or bottom of **Side Brackets 8** and **Corner Brackets 9.**

**Alignment Guide 12** and **Alignment Fastener 13** may optionally transmit electrical signals and power from **Frame 1** to **Leg Subassembly 2** through their connection with **Interface Bracket 16** located on **Pod 15.** In one non limiting aspect, **Interface Bracket 16** may include a peg that mates with **Alignment Fastener 13** wherein both components are electrically conductive. **Frame 1** may route power and electrical signals from **Energy Box 4** and **Computing Box 3** to **Alignment Fastener 13,** which may then transmit power and electrical signals to **Interface Bracket 16** through the peg and to **Leg Subassembly 2.** The interface between **Interface Bracket 16, Side Bracket 8,** and **Corner Bracket 9** may be interchangeable, wherein the electrical connection may be established through **Alignment Guide 12,** rather than **Alignment Fastener 13,** and such connection may be achieved through methods other than a peg and hole. For example, there may be an interface bus wherein a connection is established through a wire connection, or electrical power and signals may be transmitted to **Leg Subassembly 2** through wireless remote transmission technology.

Still referencing Figure 6, **Side Brackets 8** may include a **Bracket Fastener 26** that may mate with **Energy Box Fastener 21** and **Computing Box Fastener 27,** thereby providing structural support through ample connection mechanisms including, but are not limited to, threaded fasteners, clips, adhesives, hook and loops, magnets, "push and click" connectors, interference fits, and others. In another non-limiting aspect, **Corner Brackets 9** may also include **Bracket Fastener 26** thereby allowing a similar coupling thereto, though this is not pictured in Figure 6.

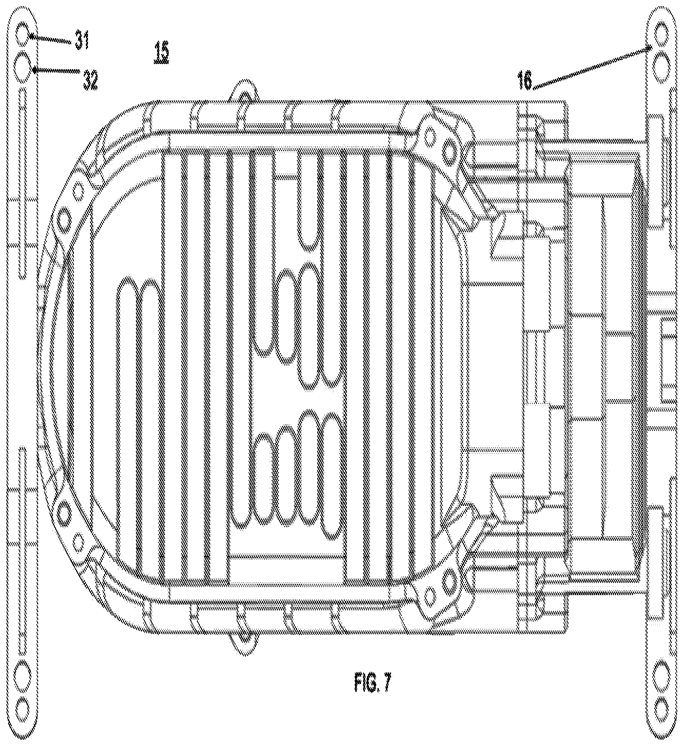

Figure 7 is a side view of **Pod 15** within **Leg Subassembly 2** according to an aspect of the present disclosure. **Pod 15** may include **Interface Bracket 16** which connects **Leg Subassembly 2** to **Frame 1.** In one non-limiting aspect, **Interface Bracket 16** may include a **Pod Fastener 31** and **Pod Guide 32** that mates with counterparts on **Frame 1,** for example, **Alignment Guide 12** and **Alignment Fastener 13,** respectively.

**Pod Guide 32** may be a geometric feature including, but not limited to, a hole, prong, or peg capable of providing alignment, and a load bearing connection when attaching to **Leg Subassembly 2** to **Frame 1** through the use of pins, splines, edge contacts, or similar mechanisms. **Pod Fastener 31** may be a retention mechanism including, but not limited to, a hole, prong, or peg to correctly align **Leg Subassembly 2** with **Frame 1** through the use of connectors including but not limited to threaded fasteners, clips, adhesives, hook and loops, interference fits, electromagnetic, or other fasteners. In one non-limiting aspect, **Pod Guide 12** may be a prong or peg, and **Pod Fastener 13** may be a hole. **Pod Guide 32** and **Pod Fastener 31** may be able to transmit electrical signals and power from **Frame 1** to **Pod 15** through connection with **Alignment Guide 12 or Alignment Faster 13.**

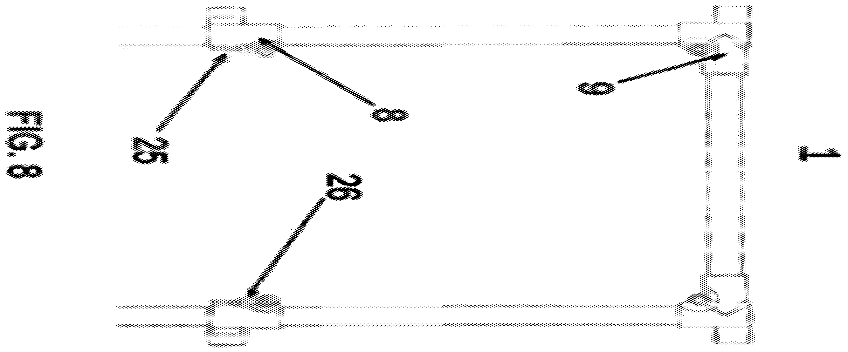

Figure 8 is a top-down view of **Frame 1** according to an aspect of the present disclosure. **Side Brackets 8** may have **Ridge 25** that may interact with **Energy Box Guide 20 or Computing Box Guide 24,** thereby preventing an incorrect installation into **Frame 1. Ridge 25** may be a unique geometric shape or frame that permits installation only when **Energy Box 4** or **Computing Box 3** is oriented in a specific and correct way, relative to **Frame 1. Side Brackets 8** may include a **Bracket Fastener 26** that may, once correct installation is permitted by **Ridge 25,** mate with **Energy Box Fastener 21** and **Computing Box Fastener 27,** thereby providing structural support through ample connection mechanisms including, but are not limited to, threaded fasteners, clips, adhesives, hook and loops, magnets, "push and click" connectors, interference fits, and others. In another non-limiting aspect, **Corner Brackets 9** may also include **Ridge 25** and **Bracket Fastener 26** thereby allowing a similar coupling thereto, although this particular configuration is not shown in Figure 8.

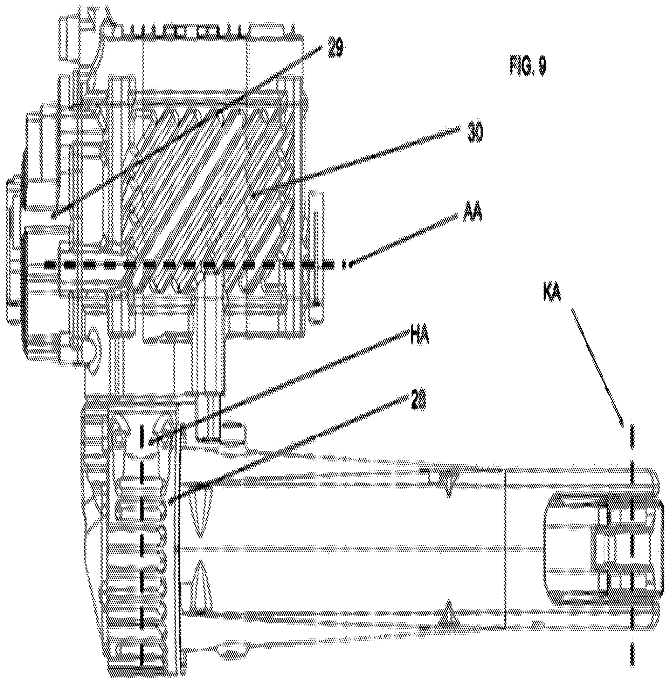

Figure 9 is a top view of **Pod 15** and **Leg Subassembly 2** according to an aspect of the present disclosure. **Pod 15** may include an **Abduction Motor 29** that may include a motor and requisite gear train, electrical and control components such as encoders and motor controllers, and kinetic transmission systems designed to actuate rotation of **Leg Components 17** about the abduction axis **AA. Pod 15** may also include a **Hip Motor 30** which may include a motor and requisite gear train, electrical and control components such as encoders and motor controllers, and kinetic transmission systems designed to actuate rotation of **Leg Components 17** about the hip axis **HA. Knee Motor 28** may include a motor and requisite gear train, electrical and control components such as encoders and motor controllers, and kinetic transmission systems designed to actuate rotation of **Leg Components 17** about the knee axis **KA.** In one non-limiting example, axes **HA** and **KA** may be parallel, and axis **AA** may be perpendicular to axes **HA** and **KA.** In one non-limiting example, **Knee Motor 28** may be located close to axis **HA** to minimize inertia.

In one non-limiting example, **Pod 15** may be mechanically coupled to **Frame 1. Abduction Motor 29** may be mechanically coupled to Frame 1. The mechanical output of **Abduction Motor 29** may be transmitted to **Hip Motor 30.** The mechanical output of **Hip Motor 30** may be transmitted to **Knee Motor 28.**

**Pod 15** may include a motor controller (not shown) that communicates with **Computing Box 3** and with one or more of **Knee Motor 28, Abduction Motor 29,** and **Hip Motor 30.** As a result of the operation of the motor controller at **Pod 15,** there may be a reduced number of wires from **Computing Box 3** to **Pod 15,** such as, in one non-limiting example, two power wires plus four signal wires. In another aspect, **Pod 15** and motors may receive additional or alternative power from **Energy Box 4.**

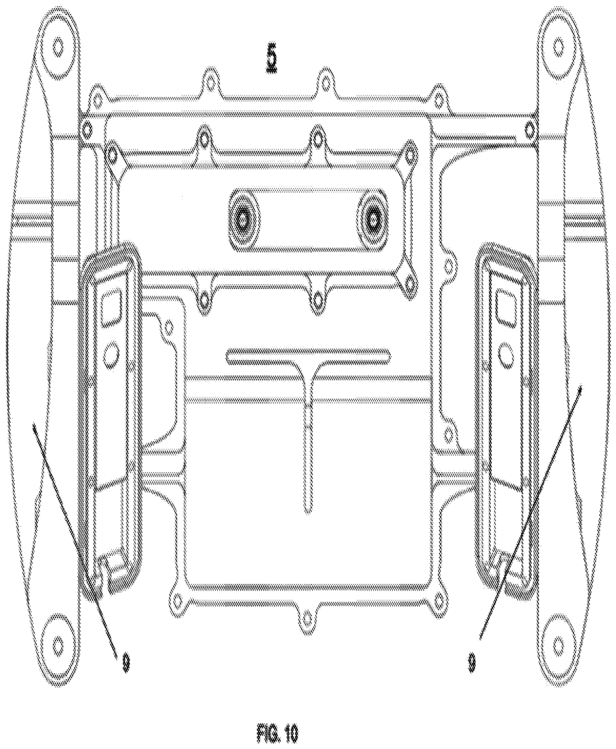

Figure 10 is a front view of **Sensor Panel 5** according to an aspect of the present disclosure. **Sensor Panel 5** may be a panel that supports or provides connections for electrical, sensory and user interface components that may be attached to the front, back, or side of **Frame 1. Sensor Panel 5** may support various components and connectors, including, but not limited to, sensors, screens, buttons, interface ports and buses, switches, electrical components capable of transmitting or receiving power to or from an outside source including in the presence of an electromagnetic field. In one non-limiting aspect, **Sensor Panel 5** may have an electrical interface wherein **Robotic System 500** may be electrically charged through connection to an outside power source. In one non-limiting aspect, **Sensor Panel 9** may be affixed to **Corner Brackets 9** through various connective techniques including but not limited to, welding, clamping, adhesive, threaded fasteners, interference fit, magnetic, hook and loop, or similar j oining technologies.

The above description presents the best mode contemplated for carrying out the present embodiments, and of the manner and process of practicing them, in such full, clear, concise, and exact terms as to enable any person skilled in the art to which they pertain to practice these embodiments. The present embodiments are, however, susceptible to modifications and alternate constructions from those discussed above that are fully equivalent. Consequently, the present invention is not limited to the particular embodiments disclosed, but defined by the appended claims.

For example, the steps in the processes described herein need not be performed in the same order as they have been presented, and may be performed in any order(s). Further, steps that have been presented as being performed separately may in alternative embodiments be performed concurrently. Likewise, steps that have been presented as being performed concurrently may in alternative embodiments be performed separately.

## Claims

1. A legged robot, comprising:
a frame (1) comprising a plurality of links (10, 11) in mechanical communication with a plurality of brackets (8, 9), the frame forming a front, back, top, bottom, and sides;
four interchangeable leg subassemblies (2), the leg subassemblies being in mechanical communication with one or more of the plurality of brackets, each leg subassembly comprising an electric knee motor (28), an electric abduction motor (29), an electric hip motor (30), and a pod (15) enclosing motor control electronics and at least one of the electric abduction motor (29) and the electric hip motor (30) in a secure and isolated environment,
wherein:
the electric hip motor (30) is mechanically coupled to an output of the electric abduction motor (29),
the electric knee motor (28) is mechanically coupled to an output of the electric hip motor (30),
the electric abduction motor (29) is mechanically coupled to the frame, and
the pod (15) comprises an interface bracket (16) configured to align and connect the leg subassembly to the frame (1) and supply electric power and control signals to the components of the pod via an alignment guide (12) and alignment fastener (13);
a computer module (3) in mechanical communication with one or more of the plurality of brackets and in electrical communication with the leg subassemblies (2) through the interface brackets (16); and
a power module (4) in mechanical communication with one or more of the plurality of brackets and in electrical communication with the leg subassemblies (2) through the interface brackets (16) and the computer module.

2. The legged robot of claim 1, wherein the motor enclosure (15) encloses a motor controller in electrical communication with the computer module.

3. The legged robot of claim 1, wherein each of the electric abduction motor (29), electric hip motor (30), and electric knee motor (28) has an associated encoder, and each associated encoder is in electronic communication with the motor controller.

4. The legged robot of claim 1, wherein the electric abduction motor (29) actuates movement of the motor enclosure (15).

5. The legged robot of claim 1, where the alignment fastener (13) facilitates communication of one of electrical power and electrical signal to the motor enclosure.

6. The legged robot of claim 1, wherein the electric knee motor (28) is mechanically coupled to an upper leg member, and the upper leg member is mechanically coupled to a lower leg member by a joint.

7. The legged robot of claim 1, further comprising a sensor head mechanically coupled to one or more of the plurality of brackets and in electrical communication with one or more of the computer module (3) and the power module (4).

8. The legged robot of claim 1, wherein the computer module (3) and power module (4) are at least partially located within an interior space within the frame.

9. The legged robot of claim 1, wherein one or more of the plurality of brackets comprise payload fasteners (14).

## Patentansprüche

1. Laufroboter, umfassend:
einen Rahmen (1), der eine Vielzahl von Gelenkgliedern (10, 11) umfasst, die in mechanischer Verbindung mit einer Vielzahl von Halterungen (8, 9) stehen, wobei der Rahmen eine Vorderseite, eine Rückseite, eine Oberseite, eine Unterseite und Seiten bildet;
vier austauschbare Beinbaugruppen (2), wobei die Beinbaugruppen in mechanischer Verbindung mit einer oder mehreren der Halterungen stehen und jede Beinbaugruppe einen elektrischen Kniemotor (28), einen elektrischen Abduktionsmotor (29), einen elektrischen Hüftmotor (30), sowie eine Kapsel (15), die die Motorsteuerelektronik und mindestens einen der elektrischen Abduktionsmotoren (29) oder Hüftmotoren (30) in einer sicheren und isolierten Umgebung umschließt,
wobei:
der elektrische Hüftmotor (30) mechanisch mit einem Ausgang des elektrischen Abduktionsmotors (29) gekoppelt ist,
der elektrische Kniemotor (28) mechanisch mit einem Ausgang des elektrischen Hüftmotors (30) gekoppelt ist, der elektrische Abduktionsmotor (29) mechanisch mit dem Rahmen gekoppelt ist, und
die Kapsel (15) eine Schnittstellenhalterung (16) umfasst, die so ausgelegt ist, dass sie die Beinbaugruppe am Rahmen (1) ausrichtet und mit diesem verbindet sowie den Komponenten der Kapsel über eine Ausrichtungsführung (12) und ein Ausrichtungsbefestigungselement (13) elektrische Energie und Steuersignale zuführt;
ein Computermodul (3), das in mechanischer Verbindung mit einer oder mehreren der mehreren Halterungen steht und über die Schnittstellenhalterungen (16) in elektrischer Verbindung mit den Beinbaugruppen (2) steht; und
ein Leistungsmodul (4), das in mechanischer Verbindung mit einer oder mehreren der mehreren Halterungen steht und über die Schnittstellenhalterungen (16) und das Computermodul in elektrischer Verbindung mit den Beinbaugruppen (2) steht.

2. Laufroboter nach Anspruch 1, wobei das Motorgehäuse (15) eine Motorsteuerung umschließt, die in elektrischer Verbindung mit dem Computermodul steht.

3. Laufroboter nach Anspruch 1, wobei sowohl der elektrische Abduktionsmotor (29) als auch der elektrische Hüftmotor (30) und der elektrische Kniemotor (28) jeweils über einen zugehörigen Encoder verfügen und jeder zugehörige Encoder in elektronischer Verbindung mit der Motorsteuerung steht.

4. Laufroboter nach Anspruch 1, wobei der elektrische Abduktionsmotor (29) die Bewegung des Motorgehäuses (15) bewirkt.

5. Laufroboter nach Anspruch 1, wobei das Ausrichtungsbefestigungselement (13) die Übertragung von elektrischer Energie oder elektrischen Signalen zum Motorgehäuse ermöglicht.

6. Laufroboter nach Anspruch 1, wobei der elektrische Kniemotor (28) mechanisch mit einem Oberschenkelelement gekoppelt ist und das Oberschenkelelement über ein Gelenk mechanisch mit einem Unterschenkelelement gekoppelt ist.

7. Laufroboter nach Anspruch 1, der ferner einen Sensorkopf umfasst, der mechanisch mit einer oder mehreren der Vielzahl an Halterungen gekoppelt ist und in elektrischer Verbindung mit dem Computermodul (3) und/oder dem Leistungsmodul (4) steht.

8. Laufroboter nach Anspruch 1, wobei sich das Computermodul (3) und das Leistungsmodul (4) zumindest teilweise in einem Innenraum innerhalb des Rahmens befinden.

9. Laufroboter nach Anspruch 1, wobei eine oder mehrere der Vielzahl an Halterungen Nutzlastbefestigungen (14) umfassen.

## Revendications

1. Un robot à jambes, comprenant :
un châssis (1) comprenant une pluralité de liens (10, 11) reliés mécaniquement à une pluralité de supports (8, 9), le châssis formant une face avant, une face arrière, une face supérieure, une face inférieure et des côtés ;
quatre sous-ensembles de jambe interchangeables (2), les sous-ensembles de jambe étant en communication mécanique avec un ou plusieurs des supports de la pluralité de supports, chaque sous-ensemble de jambe comprenant un moteur électrique de genou (28), un moteur électrique d'abduction (29), un moteur électrique de hanche (30), et un boîtier (15) renfermant l'électronique de commande des moteurs ainsi qu'au moins un des moteurs électriques d'abduction (29) et de hanche (30) dans un environnement sécurisé et isolé,
dans lequel:
le moteur électrique de hanche (30) est couplé mécaniquement à une sortie du moteur électrique d'abduction (29),
le moteur électrique de genou (28) est couplé mécaniquement à une sortie du moteur électrique de hanche (30),
le moteur électrique d'abduction (29) est couplé mécaniquement au châssis, et
le boîtier (15) comprend un support d'interface (16) configuré pour aligner et relier le sous-ensemble de jambe au châssis (1) et pour fournir de l'énergie électrique et des signaux de commande aux composants du boîtier via un guide d'alignement (12) et une fixation d'alignement (13) ;
un module informatique (3) en communication mécanique avec un ou plusieurs des supports de la pluralité de supports et en communication électrique avec les sous-ensembles de pieds (2) par l'intermédiaire des supports d'interface (16) ; et
un module d'alimentation (4) en communication mécanique avec un ou plusieurs des supports de la pluralité de supports et en communication électrique avec les sous-ensembles de pieds (2) par l'intermédiaire des supports d'interface (16) et du module informatique.

2. Le robot à jambes selon la revendication 1, dans lequel le boîtier de moteur (15) renferme un contrôleur de moteur en communication électrique avec le module informatique.

3. Le robot à jambes selon la revendication 1, dans lequel chacun du moteur électrique d'abduction (29), du moteur électrique de hanche (30) et du moteur électrique de genou (28) est associé à un codeur, et chaque codeur associé est en communication électronique avec le contrôleur de moteur.

4. Le robot à jambes selon la revendication 1, dans lequel le moteur électrique d'abduction (29) actionne le mouvement du boîtier de moteur (15).

5. Le robot à jambes selon la revendication 1, dans lequel la fixation d'alignement (13) permet la transmission soit de l'alimentation électrique, soit d'un signal électrique vers le boîtier de moteur.

6. Le robot à jambes selon la revendication 1, dans lequel le moteur électrique de genou (28) est couplé mécaniquement à un membre de jambe supérieur, et le membre de jambe supérieur est couplé mécaniquement à un membre de jambe inférieur par une articulation.

7. Le robot à jambes selon la revendication 1, comprenant en outre une tête de capteur couplée mécaniquement à un ou plusieurs des supports de la pluralité de supports et en communication électrique avec un ou plus du module informatique (3) et du module d'alimentation (4).

8. Le robot à jambes selon la revendication 1, dans lequel le module informatique (3) et le module d'alimentation (4) sont au moins partiellement situés dans un espace intérieur du châssis.

9. Le robot à jambes selon la revendication 1, dans lequel un ou plus parmi la pluralité de supports comprennent des fixations de charge utile (14).
